# EUROPEAN PATENT SPECIFICATION

(11) **EP 3 030 878 B1**
(45) Date of publication and mention of the grant of the patent: **09.12.2020**
(21) Application number: 14745058.9
(22) Date of filing: 14.07.2014
(51) Int. Cl.: G01N 1/22, G01N 15/02, G01N 15/10, G01N 15/00

(54) **PARTICLE CAPTURE DEVICE**
PARTIKELKOLLEKTOR
DISPOSITIF DE CAPTURE DE PARTICULES

(30) Priority: 07.08.2013 US 201313961469
(43) Date of publication of application: 15.06.2016
(73) Proprietor: Aerodyne Research, Inc., Billerica, MA 01821-3976 (US)
(72) Inventor: JAYNE, John T., Billerica, Massachusetts 01821-3976 (US); WORSNOP, Douglas R., Billerica, Massachusetts 01821-3976 (US)
(74) Representative: Rupprecht, Kay
(86) International application number: PCT/US2014/046508
(87) International publication number: WO 2015/020758

(56) References cited:
- DE-A1- 3 938 194
- DE-A1- 3 938 194
- US-A- 4 968 885
- US-A- 4 968 885
- US-A1- 2004 025 604
- US-A1- 2012 255 375
- US-A1- 2012 255 375
- US-A1- 2013 011 930
- US-A1- 2013 011 930

## Description

### BACKGROUND

### GOVERNMENT LICENSE RIGHTS

### Technical Field

The present disclosure relates generally to aerosol analyzers and other particle measuring instruments, and more specifically to a particle capture device usable in aerosol analyzers and other particle measuring instruments.

### Background Information

Fine atmospheric aerosols resulting from internal combustion engines, fossil fuel fired power plants, painting/stripping faculties, gas discharge boiler operations and other anthropogenic and biogenic sources, are known to have a serious impact on climate and human health. These aerosols are comprised of micron and sub micron sized particles, having various size distributions and chemical compositions. Such particles can influence climate directly by scattering or absorbing sunlight, and indirectly by altering cloud coverage. Further, such particles can contribute to health problems such as asthma, lung cancer, cardiovascular disease, respiratory disease, and other conditions. Given their impact on climate and human health, fine atmospheric aerosols composed of micron and sub micron sized particles are the subject to widespread study and monitoring.

A variety of different types of aerosol analyzers and other particle measuring instruments have been developed to determine particle size distributions and chemical compositions of fine atmospheric aerosols. In one type of instrument, a focused particle beam is generated and directed towards a generally flat collection surface. The particles impact the collection surface, and a portion of them are retained. The retained particles are vaporized, and the resulting gaseous molecules are provided to a detector that produces results. White such an instrument may provide valuable information, typical designs have shortcomings.

One shortcoming of typical designs is that they have low particle collection efficiency. A significant percentage of particles impacting the collection surface may simply bounce off (i.e. impact and rebound), and be lost rather than vaporized and analyzed. Low particle collection efficiency may limit the overall performance of the instrument. White attempts have been made to increase particle collection efficiency, such attempts have had mixed results.

Some attempts have focused on changing particle properties to reduce particle bounce. Modifications are made to the particles before they impact the collection surface. Other attempts have focused on modifying the impact surface, such as using greased plate impactors. However, particle bounce is a complex phenomenon. A wide variety of factors, including size, chemical composition, phase (e.g., liquid or solid), impact velocity, and the like, may be in play. Given the complexities, modifying particle or impact surface properties to reduce particle bounce is challenging.

Other attempts have focused on applying corrections to compensate for low particle collection efficiency. Empirically determined correction factors may be applied to results to compensate for losses of mass or losses of concentration resulting from particle bounce. However, determining the appropriate correction factors may be challenging. Further, correction factors merely mask, and do not address, the underlying problem of low particle collection efficiency. US 2012/255375 A1 discloses a particle capturing device that includes a needle like collision structure. Other particle capturing devices are disclosed in US 2013/011930 A1, US 4968885 A, DE 3938194 A1 and US 2004/025604 A1.

Accordingly, there is a need for improved techniques that may be used to, among other things, improve particle collection efficiency in aerosol analyzers and other particle measuring instruments.

### SUMMARY

The device according to the present invention is defined by claim 1. The method according to the present invention is defined by claim 12. Further preferred aspects are defined by the dependent claims. In example embodiments, particle collection efficiency in aerosol analyzers and other particle measuring instruments is improved by a particle capture device that employs multiple collisions to decrease momentum of particles until the particles are collected (e.g., vaporized or come to rest). The particle collection device includes an aperture through which a focused particle beam enters. A collection enclosure is coupled to the aperture and has one or more internal surfaces against which particles of the focused beam collide. One or more features are employed with the internal surfaces to promote particles to collide multiple times within the enclosure, and thereby be vaporized or come to rest, rather than escape through the aperture.

To promote multiple collisions, a ratio of an internal collision area of the collection enclosure to an entrance area of the aperture may be maximized. A surface area of the internal surfaces of the collection enclosure defines the internal collision area. Boundaries of the aperture define the entrance area. The ratio should be greater than 1:1, and preferable should be greater than 20:1. In one implementation, the ratio is approximately 37:1. The ratio may be maximized by utilizing a special geometry for the internal surfaces of the collection enclosure. The ratio may also be maximized by altering surface properties of the internal surfaces of the collection enclosure. Further, a combination of the two approaches may be employed.

### BRIEF DESCRIPTION OF THE DRAWINGS

The description below refers to the accompanying drawings of example embodiments, of which:
Fig. 1 is a schematic diagram of an example aerosol analyzer in which an example particle capture device may be employed;
Fig. 2 is a perspective view of an example particle capture device that utilizes geometry to promote multiple collisions;
Fig. 3 is a first cross section of the example particle capture device of Fig. 2;
Fig. 4 is a second cross section of the example particle capture device of Figs. 2 and 3, taken along major axis J-J in Fig. 3;
Fig. 5 is an enlarged cross section of the example particle capture device of Figs. 2-4, showing detail of region K in Fig. 4; and
Fig. 6 is a ray trace model of an example single particle trajectory in the example particle capture device of Figs. 2-5.

### DETAILED DESCRIPTION OF AN EXAMPLE EMBODIMENTS

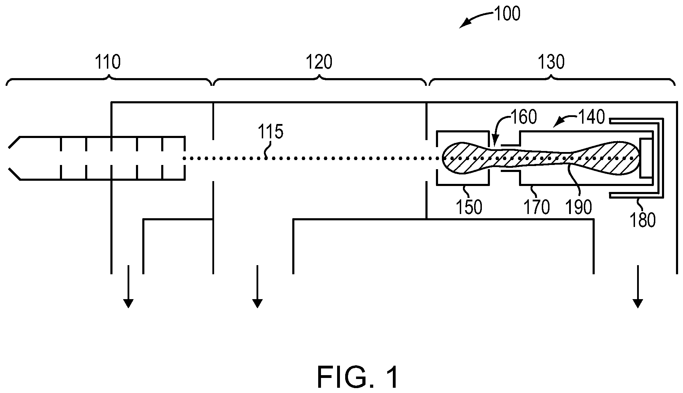

Referring to Fig. 1, an example aerosol analyzer 100 may include three main sections: an aerosol sampling chamber 110, a particle sizing chamber 120, and a particle composition detection chamber 130. The aerosol sampling chamber 110 draws in particle-laden gas (e.g., atmospheric air) having micron and/or sub-micron particles, and produces a focused particle beam 115. In one implementation, the aerosol sampling chamber 110 includes a series of orifice lenses under the pull of a vacuum system. The lenses serve to focus particles and to control supersonic gas expansion and particle acceleration, to form the focused particle beam 115. The focused particle beam 115 is passed to the particle sizing chamber 120. In the particle sizing chamber, particles are separated according to their size dependant velocity profile resulting from expansion into vacuum.. In one configuration, the particle sizing chamber 120 includes a particle charging unit (not shown) that applies an electric charge to the particles, and a deflection section (not shown) where an electric field deflects the particles. The degree of deflection is related to particle size (size dependant velocity, size dependant charge and applied voltage). Particles within a narrow range of sizes are caused to pass through an off-axis slit and leave the particle sizing chamber and pass into the particle composition detection chamber 130. In another configuration, the particle sizing chamber 120 includes a beam chopper (not shown) that alternately blocks and passes the focused particle beam 115 to produce a succession of beam pulses. Particles undergo velocity dispersion where the velocities are inversely related to particle size. Accordingly, as each beam pulse travels, it spreads in the direction of travel, with smaller particles arriving before larger particles. Particles of sorted sizes are thereby be delivered to the particle composition detection chamber 130.

The particle detection chamber 130 includes a particle capture device 140 and a detector 150. The focused particle beam enters the particle capture device 140 through an aperture 160. The focused particle beam 115 is then received into a collection enclosure 170 coupled to the aperture 160. A temperature change element 180 of the particle capture device 140 is arranged to heat and/or cool the collection enclosure 170, depending an the implementation. The temperature change element 180 may include a resistive heating element, a thermo eclectic cooling element (e.g., a Peltier cooler), a heating or cooling system that circulates hot or cold liquid through a closed loop circulation system, an irradiation heating source, such as a CO₂ laser, or another type of element that is capable of changing the temperature of the enclosure 170.

Particles are substantially retained in the collection enclosure 170 of the particle capture device 140 until they are vaporized (e.g., as a result of heat from the temperature change element 180), or come to rest (e.g., for later vaporization in a controlled heating cycle). In general, the particle capture device 140 may operate as a particle capture vaporizer or as a particle capture collector, depending on the implementation. In an implementation where the particle capture device 140 operates as a particle capture vaporizer, the temperature change element 180 may continuously heat the collection enclosure 170 to vaporize collected particles substantially immediately (i.e., as soon as possible). In an implementation where the particle capture device 140 operates as a particle capture collector, the temperature change element 180 may perform controlled heating cycles, with periods of heat interspersed by periods of relative cool. Entering particles may encounter an initially cool collection enclosure 170, such that collected particles are not immediately vaporized. The collected particles may later be subjected to heating and be vaporized. The heating cycle may be precisely controlled to allow particle volatility to be studied providing further information on particle composition.

Vaporized particles 190 are passed to the detector 150, which may be a mass spectrometer. In one implementation, the vaporized particles pass to the detector through the same aperture 160 that the focused particle beam originally entered. That is, the vaporized particles 190 exit the particle capture device 140 along the same axis upon which they entered as a focused particle beam 115. The aperture 160 is located within a detection region of the detector 150. In an implementation where the detector 150 includes a mass spectrometer, the aperture is within an ion formation chamber of the mass spectrometer.

As discussed above, previous collection surfaces have suffered from low particle collection efficiency. A significant percentage of particle simply bounce off the collection surfaces to be lost, such that they are not vaporized or collected for later vaporization. Rather than attempt to eliminate particle bounce, the particle capture device 140 assumes particles will bounce, and employs multiple collisions to decrease the momentum of particles until they are collected (e.g., vaporized or come to rest). The collection enclosure 170 of the particle capture device 140 includes several internal surfaces upon which the particles collide multiple times. A surface area of the internal surfaces defines an internal collision area. Boundaries of the aperture 160 of the particle capture device 140 define an entrance area. To provide for particles to be collected, rather than lost, a ratio of the internal collision area to the entrance area (referred to herein as the "capture efficiency ratio") is maximized within practical constraints. The capture efficiency ratio should be greater than 1:1, and preferable should be greater than 20:1. In one implementation, the capture efficiency ratio is approximately 37:1.

The capture efficiency ratio may be increased somewhat by reducing the entrance area. The minimum size of the aperture 160 may be defined by the width of the focused particle beam to allow full entrance thereof. The capture efficiency ratio may be increased more significantly by maximizing the internal collision area. The internal collision area may be maximized through geometry of the internal surfaces of the collection enclosure 170 and/or through surface properties of the internal surfaces of the collection enclosure 170. Geometry may be used where specular reflections dominate. With substantially smooth internal surfaces, particles may bounce in a relatively predictable manner through specular reflection. Geometry of the internal surfaces can increase specular reflections, such that particles repeatedly collide with the internal surfaces until they are vaporized or come to rest.

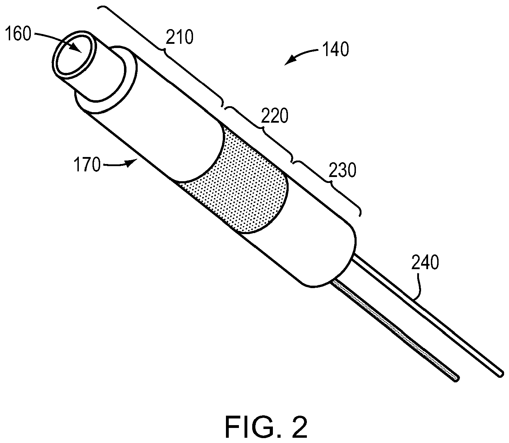

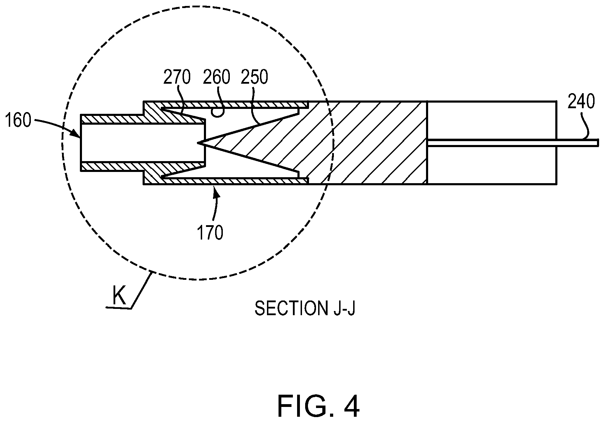

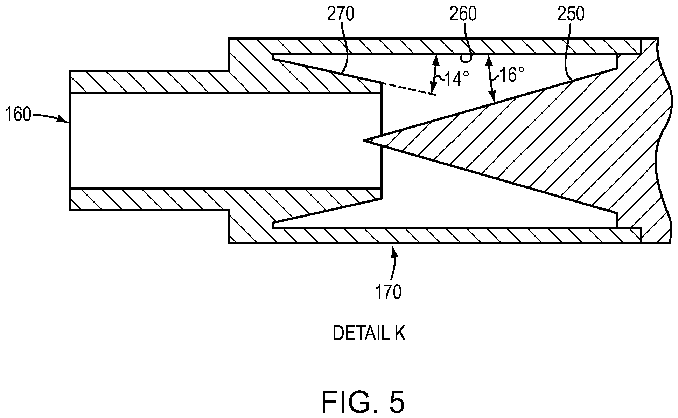

Referring to the Figs. 2-5, an example geometry is shown that promotes multiple collisions. In this example, the particle capture device 140 has a generally cylindrical configuration, and is largely symmetrical about its major axis J-J. A front portion 210 of the particle capture device 140 includes the aperture 160 and the collection enclosure 170. The front portion 210 may be constructed from a solid piece of material, for example, a refractory metal such as Molybdenum or Tungsten. A heater body portion 220 of the particle capture device 140 functions as the temperature change element, in this case, providing resistive heating as current is applied to wires 240. The heater body portion 220 may be constructed from a solid piece of material also, for example, Molybdenum or Tungsten. A thermal support portion 230 of the particle capture device 140 is a thin walled tube connected to the heater body 220 and encloses part of the wires 240. By applying either continuous or cyclic heating, the particle capture device 140 may function as a particle capture vaporizer or as a particle capture collector, as discussed above. An embedded thermocouple (not shown) inside heater body 220 or at the front of heater body 220 allows for temperature measurement.

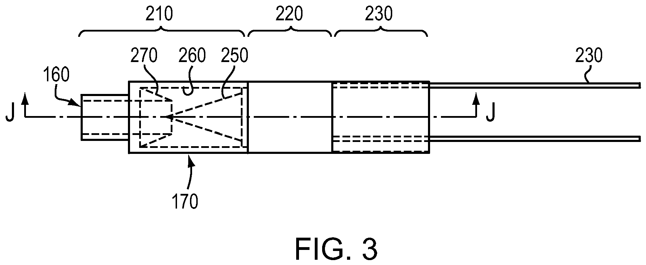

A focused particle beam may enter the aperture 160 and be received into the collection enclosure 170. The collection enclosure 170, as shown in Figs. 3-5, includes several substantially smooth internal surfaces 250, 260, 270 upon which the particles of the focused particle beam collide, and a portion thereof bounce (e.g., rebound). The internal surfaces 250, 260, 270 are arranged to promote multiple collisions and minimize the possibility of particles escaping through the aperture 160, before the particles are vaporized or come to rest, as the case may be. The geometry may serve to substantially equally distribute the particles to all points on the internal surfaces 250, 260, 270, in a manner similar to an integrating sphere in the field of optics, which distributes light over all angles.

A first internal surface 250 is positioned to receive the initial collision of the particles. The first internal surface 250 is oriented at an acute angle to the major axis J-J of the particle capture device 140 (and thereby at an acute angle to the trajectory of the focused particle beam), such that initial collisions (assuming spectral reflection) reduce momentum of the particles, but preserve the direction of the forward velocity vector components of the particles. That is, the orientation causes the particles to bounce (assuming spectral reflection) further into the collection enclosure 170 rather than towards that aperture 160. Preferably the angle between the major axis J-J (and the particle beam trajectory) and the first internal surface 250 is less than 30°. A shallower angle may lead to a more efficient but larger particle capture device 140. In one implementation, the angle between the major axis J-J (and the particle beam trajectory) and the first surface 250 is 16°. The first surface 250 may have a substantially conical shape, with a vertex angle of 16°.

The second internal surface 260 is oriented at an acute angle to the first internal surface 250 and is configured to receive the next collision (assuming spectral reflection). The orientation again causes the particles to bounce (assuming spectral reflection) further into the collection enclosure 170 rather than towards that aperture 160. In one implementation, the second internal surface 260 is parallel to the major axis J-J such that an angle between the second internal surface 260 and the first internal surface is again 16°. The second internal surface 260 may have a substantially cylindrical shape.

Particles may repeatedly bounce between the first internal surface 250 and the second internal surface 260 and may eventually encounter the third internal surface 270. The third internal surface 270 is oriented at an acute angle with respect to the second internal surface 260, and is configured to retain particles that are moving in a direction towards the aperture 160. In one implementation, an angle between the second internal surface 260 and the third internal surface is 270 is 14°. The third internal surface 270 may be shaped sustainably as a conical frustum, with the aperture 160 at its apex.

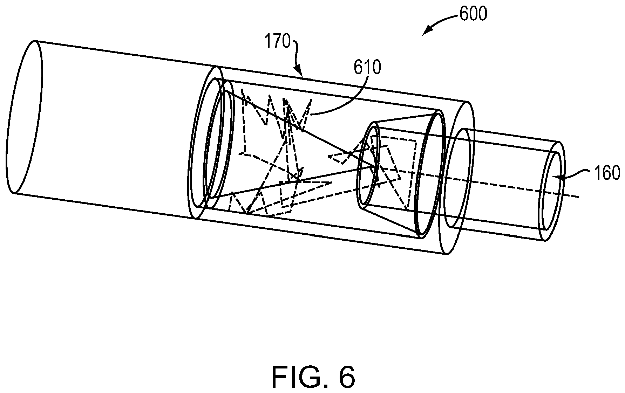

It should be understood that spectral reflection is an idealized case, and even with substantially smooth surfaces, particles exhibit some variation in how they rebound. The example geometry of the example particle capture device 140 may minimize the number of particles that escape despite this variation. Referring to the ray trace model 600 of a single particle trajectory 610 shown in Fig. 6, it can be seen that a particle is likely to undergo multiple collisions after it enters the collection enclosure 170, and finally be vaporized or come to rest.

As mentioned above, rather than, or in addition to special geometry, surface properties of one or more internal surfaces of the collection enclosure 170 may be used to promote multiple collisions. When surface roughness is introduced to one or more internal surfaces, colliding particles may undergo more random reflections such that diffuse reflections dominate. Surface roughness may be introduced by adding wires entanglements (e.g., wire "birds nests"), constructing the surfaces from porous materials (e.g., which provide nooks and crevices), adding micro-scaled or nano-scaled grids produced from nano-technology processes or etching processes, or some other means of adding surface roughness. Surface roughness and the diffuse reflections resulting therefrom, may be used together with special geometry to improve particle collection efficiency. However, diffuse reflections may also limit particle collection efficiency, and proved unwanted, in some cases.

While the above description discusses various example embodiments of the present disclosure, it should be apparent that a number of modifications and/or additions may be made without departing from the disclosure's intended spirit and scope.

For example, while it is discussed above that the particle device 140 may be used in an example aerosol analyzer 100 designed to measure fine atmospheric aerosols, it should be understood such the device 140 may also be used in a variety of other types of instruments, including other particle measuring instruments that measure particles from non-atmospheric sources. Such particle measuring instruments may lack some of the capabilities of the example aerosol analyzer 100, for instance the ability to produce results as function of particle size, and may have additional capabilities beyond those of the example aerosol analyzer 100.

Further, while certain materials such as Molybdenum and Tungsten, and certain shapes such as cylinders, cones and conical frustums, are discussed above, it should be understood the particle capture device 140 and, specifically the collection enclosure 170, may be constructed from a variety of different materials, and be formed in a variety of different shapes suited for the goals discussed herein, within the scope of appended claims. In general, it should be understood that the above descriptions are meant to be taken only by way of example.

## Claims

1. A particle capture device 140 for capturing micron and/or sub-micron sized particles in an instrument, comprising:
an aperture 160 through which a focused particle beam including micron and/or sub-micron particles enters the particle capture device; and
a collection enclosure 170 coupled to the aperture 160 and into which the focused particle beam is received, the collection enclosure 170 having a plurality of internal surfaces 250-270 upon which the particles collide multiple times until the particles are vaporized or come to rest for subsequent vaporization, the plurality of internal surfaces 250-270 including
a first substantially smooth internal surface 250 arranged in an initial trajectory of the focused particle beam to receive an initial collision of particles, the first substantially smooth internal surface orientated at a first acute angle with respect to the initial trajectory, the first acute angle with respect to the initial trajectory sufficient to provide that the initial collision reduces momentum of the particles but preserves a direction of a forward velocity vector component of the particles, and **characterized in** a second internal surface 260 surrounding the first substantially smooth internal surface 250, the second internal surface 260 oriented at a second acute angle with respect to the first substantially smooth internal surface 250, the second internal surface 260 to receive a next collision of particles reflected from the first substantially smooth internal surface 250 further into the collection enclosure from the aperture 160.

2. The particle capture device of claim 1, wherein an area between boundaries of the aperture 160 defines an entrance area, a surface area of the one or more internal surfaces upon which the particles collide defines an internal collision area, and a ratio of the internal collision area to the entrance area is greater than 20:1

3. The particle capture device 140 of claim 1, wherein the particle capture device operates as a particle capture vaporizer, the particle capture device further comprising:
a temperature control element 220 configured to continuously heat the collection enclosure during operation, wherein the particles collide multiple times until the particles are vaporized.

4. The particle capture device 140 of claim 1, wherein the particle capture device operates as a particle capture collector, the particle capture device further comprising:
a temperature control element 220 configured to heat the collection enclosure in controlled heating cycles,
wherein the particles collide multiple times until the particles come to rest.

5. The particle capture device 140 of claim 1, wherein the aperture 160 is both an entrance and exit aperture, such that the focused particle beam enters the collection enclosure and the vaporized particles exit the collection enclosure through the same aperture.

6. The particle capture device 140 of claim 1, wherein the plurality of internal surfaces are each substantially smooth surfaces.

7. The particle capture device 140 of claim 1, wherein the plurality of internal surfaces are arranged in a geometry that substantially equally distributes particles to all points over the plurality of internal surfaces.

8. The particle capture device 140 of claim 7, wherein the first acute angle is less than 30°.

9. The particle capture device 140 of claim 1, wherein the particle capture device comprises:
a third internal surface 270 oriented at a third acute angle with respect to the second internal surface 260.

10. The particle capture device 140 of claim 9, wherein the first and second acute angles are 16° and the third acute angle is 14°.

11. The particle capture device 140 of claim 1, wherein at least one of the plurality of internal surfaces 250-270 is a roughened surface.

12. The particle capture device 140 of claim 11, wherein the at least one of the plurality of internal surfaces 250-270 includes one or more of: wire entanglements, pores, or grids.

13. A method for capturing micron and/or sub-micron sized particles in an instrument, comprising:
passing a focused particle beam including micron and/or sub-micron particles through an aperture 160 into a collection enclosure 170 of a particle capture device 140;
causing the particles to collide multiple times with internal surfaces 250-270 of the collection enclosure 170, a first collision of a particle to be against a first substantially smooth internal surface 250 of the collection enclosure, the first substantially smooth internal surface 250 orientated at a first acute angle with respect to the initial trajectory sufficient to reduce momentum of the particle but preserve a direction of a forward velocity vector component of the particle, a second collision of the particle to be further into the collection enclosure 170 from the aperture 160 against a second substantially smooth internal surface 260 surrounding the first substantially smooth internal surface 250 and orientated at a second acute angle with respect to the first substantially smooth internal surface 250; and
heating the collection enclosure 170 to vaporize the particles.

14. The method of claim 13, further comprising:
removing vaporized particles from the collection enclosure 170 through the same aperture 160 that the focused particle beam entered the collection enclosure.

## Patentansprüche

1. Partikelkollektor 140 zum Einfangen von Partikeln mit Mikron- und/oder Submikrongröße in einem Instrument, umfassend:
eine Öffnung 160, durch welche ein konzentrierter Partikelstrahl mit Mikron- und/oder Submikronpartikel in den Partikelkollektor eintritt; und ein Sammelgehäuse 170, das mit der Öffnung 160 verbunden ist und in welchem der konzentrierte Partikelstrahl aufgenommen wird, wobei das Sammelgehäuse 170 eine Vielzahl von Innenflächen 250-270 aufweist, auf denen die Partikel mehrmals aufprallen, bis die Partikel verdampft sind oder zur anschließenden Verdampfung hängenbleiben, wobei die Vielzahl von Innenflächen 250-270 umfasst:
eine erste, im Wesentlichen glatte Innenfläche 250, die in einer anfänglichen Bewegungsbahn des konzentrierten Partikelstrahls eingerichtet ist, um einen Anfangsaufprall von Partikeln aufzunehmen, wobei die erste, im Wesentlichen glatte Innenfläche in einem ersten spitzen Winkel bezüglich der anfänglichen Bewegungsbahn ausgerichtet ist, der erste spitze Winkel bezüglich der anfänglichen Bewegungsbahn ausreichend ist, um zu bewirken, dass der Anfangsaufprall einen Impuls der Partikel reduziert, jedoch die Richtung einer Vorwärtskomponente des Geschwindigkeitsvektors der Partikel beibehält, und **gekennzeichnet durch**
eine zweite Innenfläche 260, die die erste, im Wesentlichen glatte Innenfläche 250 umgibt, wobei die zweite Innenfläche 260 in einem zweiten spitzen Winkel bezüglich der ersten, im Wesentlichen glatten Innenfläche 250 ausgerichtet ist, wobei die zweite Innenfläche 260 einen nächsten Aufprall von Partikeln, die von der ersten, im Wesentlichen glatten Innenfläche 250 weiter in das Sammelgehäuse von der Öffnung 160 reflektiert werden, aufnehmen soll.

2. Partikelkollektor nach Anspruch 1, wobei ein Bereich zwischen Begrenzungen der Öffnung 160 einen Eingangsbereich bildet, ein Oberflächenbereich der einen oder mehreren Innenflächen, auf denen die Partikel aufprallen, einen inneren Aufprallbereich bildet, und ein Verhältnis des inneren Aufprallbereichs zum Eingangsbereich größer als 20:1 ist.

3. Partikelkollektor 140 nach Anspruch 1, wobei der Partikelkollektor wie ein Partikeleinfangverdampfer arbeitet, wobei der Partikelkollektor des Weiteren umfasst:
ein Temperatursteuerelement 220, gestaltet, um das Sammelgehäuse bei Betrieb fortlaufend zu beheizen, wobei die Partikel mehrmals aufprallen, bis die Partikel verdampft sind.

4. Partikelkollektor 140 nach Anspruch 1, wobei der Partikelkollektor wie ein Partikeleinfangsammler arbeitet, wobei der Partikelkollektor des Weiteren umfasst:
ein Temperatursteuerelement 220, gestaltet, um das Sammelgehäuse in gesteuerten Heizzyklen zu beheizen,
wobei die Partikel mehrmals aufprallen, bis die Partikel hängen bleiben.

5. Partikelkollektor 140 nach Anspruch 1, wobei die Öffnung 160 sowohl eine Eingangs- wie auch Ausgangsöffnung ist, so dass der konzentrierte Partikelstrahl in das Sammelgehäuse eintritt und die verdampften Partikel das Sammelgehäuse durch die gleiche Öffnung verlassen.

6. Partikelkollektor 140 nach Anspruch 1, wobei die Vielzahl von Innenflächen jeweils im Wesentlichen glatte Oberflächen sind.

7. Partikelkollektor 140 nach Anspruch 1, wobei die Vielzahl von Innenflächen in einer Geometrie angeordnet ist, die die Partikel gleichmäßig zu allen Punkten über die Vielzahl von Innenflächen verteilt.

8. Partikelkollektor 140 nach Anspruch 7, wobei der erste spitze Winkel kleiner als 30° ist.

9. Partikelkollektor 140 nach Anspruch 1, wobei der Partikelkollektor eine dritte Innenfläche 270 aufweist, die in einem dritten spitzen Winkel bezüglich der zweiten Innenfläche 260 ausgerichtet ist.

10. Partikelkollektor 140 nach Anspruch 9, wobei der erste und der zweite spitze Winkel 16° und der dritte spitze Winkel 14° ist.

11. Partikelkollektor 140 nach Anspruch 1, wobei mindestens eine der Vielzahl von Innenflächen 250-270 eine aufgeraute Oberfläche ist.

12. Partikelkollektor 140 nach Anspruch 11, wobei die zumindest eine der Vielzahl von Innenflächen 250-270 eins oder mehrere von: Drahtsperren, Poren oder Gitter enthält.

13. Verfahren zum Einfangen von Partikeln mit Mikron- und oder Submikrongröße in einem Instrument, umfassend:
Führen eines konzentrierten Partikelstrahls, der Mikron- und/oder Submikronpartikel enthält, durch eine Öffnung 160 in ein Sammelgehäuse 170 eines Partikelkollektors 140;
Bewirken, dass die Partikel mehrmals mit Innenflächen 250-270 des Sammelgehäuses 170 zusammenprallen, ein erster Zusammenprall eines Partikels gegen eine erste, im Wesentlichen glatte Innenfläche 250 des Sammelgehäuses erfolgt, wobei die erste, im Wesentlichen glatte Innenfläche 250 in einem ersten spitzen Winkel bezüglich der anfänglichen Bewegungsbahn ausgerichtet ist, ausreichend, um einen Impuls des Partikels zu reduzieren, jedoch die Richtung einer Vorwärtskomponente des Geschwindigkeitsvektors des Partikels beizubehalten, wobei ein zweiter Zusammenprall des Partikels außerdem in das Sammelgehäuse 170 von der Öffnung 160 gegen eine zweite, im Wesentlichen glatte Innenfläche 260 erfolgt, die die erste, im Wesentlichen glatte Innenfläche 250 umgibt und in einem zweiten spitzen Winkel bezüglich der ersten, im Wesentlichen glatten Innenfläche 250 ausgerichtet ist; und
das Sammelgehäuse 170 erhitzt wird, um die Partikel zu verdampfen.

14. Verfahren nach Anspruch 13, des Weiteren umfassend:
Entnehmen von verdampften Partikeln aus dem Sammelgehäuse 170 durch die gleiche Öffnung 160, durch die der konzentrierte Partikelstrahl in das Sammelgehäuse eingetreten ist.

## Revendications

1. Dispositif de capture de particules (140) destiné à capturer des particules de taille micrométrique et/ou sous-micrométrique dans un instrument, comprenant :
une ouverture (160) à travers laquelle un faisceau de particules focalisé incluant des particules micrométriques et/ou sous-micrométriques entre dans le dispositif de capture de particules ; et
un boîtier de collecte (170) couplé à l'ouverture (160) et dans lequel le faisceau de particules focalisé est reçu, le boîtier de collecte (170) ayant une pluralité de surfaces internes (250-270) sur lesquelles les particules viennent en collision de multiples fois jusqu'à ce que les particules soient vaporisées ou viennent au repos pour une vaporisation ultérieure, la pluralité de surfaces internes (250-270) incluant :
une première surface interne sensiblement lisse (250) agencée dans une trajectoire initiale du faisceau de particules focalisé pour recevoir une collision initiale de particules, la première surface interne sensiblement lisse étant orientée sous un premier angle aigu par rapport à la trajectoire initiale, le premier angle aigu par rapport à la trajectoire initiale étant suffisant pour faire en sorte que la collision initiale réduise l'impulsion des particules mais préserve une direction d'un composant de vecteur de vitesse avant des particules,
et **caractérisé**
**par** une deuxième surface interne (260) entourant la première surface interne sensiblement lisse (250), la deuxième surface interne (260) étant orientée sous un deuxième angle aigu par rapport à la première surface interne sensiblement lisse (250), la deuxième surface interne (260) étant également configurée pour recevoir une collision suivante de particules réfléchies depuis la première surface interne sensiblement lisse (250) jusque dans le boîtier de collecte depuis l'ouverture (160).

2. Dispositif de capture de particules selon la revendication 1, dans lequel une zone entre des frontières de l'ouverture (160) définit une zone d'entrée, une zone de surface desdites une ou plusieurs surfaces internes sur lesquelles les particules viennent en collision définit une zone de collision interne, et un rapport de la zone de collision interne sur la zone d'entrée est supérieur à 20:1.

3. Dispositif de capture de particules (140) selon la revendication 1, dans lequel le dispositif de capture de particules a une fonction de vaporisateur de capture de particules, le dispositif de capture de particules comprenant en outre :
un élément de commande de température (220) configuré pour chauffer en continu le boîtier de collecte pendant le fonctionnement, dans lequel les particules viennent en collision de multiples fois jusqu'à ce que les particules soient vaporisées.

4. Dispositif de capture de particules (140) selon la revendication 1, dans lequel le dispositif de capture de particules a une fonction de collecteur de capture de particules, le dispositif de capture de particules comprenant en outre :
un élément de commande de température (220) configuré pour chauffer le boîtier de collecte dans des cycles de chauffe commandés,
dans lequel les particules viennent en collision de multiples fois jusqu'à ce que les particules viennent au repos.

5. Dispositif de capture de particules (140) selon la revendication 1, dans lequel l'ouverture (160) est à la fois une ouverture d'entrée et de sortie, de sorte que le faisceau de particules focalisé entre dans le boîtier de collecte et les particules vaporisées sortent du boîtier de collecte par la même ouverture.

6. Dispositif de capture de particules (140) selon la revendication 1, dans lequel la pluralité de surfaces internes sont chacune des surfaces sensiblement lisses.

7. Dispositif de capture de particules (140) selon la revendication 1,
dans lequel la pluralité de surfaces internes sont agencées selon une géométrie qui distribue des particules de manière sensiblement égale vers tous les points sur la pluralité de surfaces internes.

8. Dispositif de capture de particules (140) selon la revendication 7, dans lequel le premier angle aigu est inférieur à 30°.

9. Dispositif de capture de particules (140) selon la revendication 1, dans lequel le dispositif de capture de particules comprend :
une troisième surface interne (270) orientée sous un troisième angle aigu par rapport à la deuxième surface interne (260).

10. Dispositif de capture de particules (140) selon la revendication 9, dans lequel le premier et le deuxième angle aigu sont de 16° et le troisième angle aigu est de 14°.

11. Dispositif de capture de particules (140) selon la revendication 1, dans lequel au moins une surface parmi la pluralité de surfaces internes (250-270) est une surface rugueuse.

12. Dispositif de capture de particules (140) selon la revendication 11, dans lequel ladite au moins une surface parmi la pluralité de surfaces internes (250-270) inclut un ou plusieurs élément parmi : des enchevêtrements de fils, des pores ou des grilles.

13. Procédé pour capturer des particules de taille micrométrique et/ou sous-micrométrique dans un instrument, comprenant les étapes consistant à :
faire passer un faisceau de particules focalisé incluant des particules micrométriques et/ou sous-micrométriques par une ouverture (160) jusque dans un boîtier de collecte (170) d'un dispositif de capture de particules (140) ;
amener les particules à venir en collision de multiples fois avec des surfaces internes (250-270) du boîtier de collecte (170), une première collision d'une particule ayant lieu contre une première surface interne sensiblement lisse (250) du boîtier de collecte, la première surface interne sensiblement lisse (250) étant orientée sous un premier angle aigu par rapport à la trajectoire initiale suffisamment pour réduire l'impulsion des particules mais préserver une direction d'un composant de vecteur de vitesse avant de la particule, une deuxième collision de la particule ayant lieu en outre dans le boîtier de collecte (170) en provenant de l'ouverture (160) contre une deuxième surface interne sensiblement lisse (260) entourant la première surface interne sensiblement lisse (250) et orientée sous un deuxième angle aigu par rapport à la première surface interne sensiblement lisse (250) ; et
chauffer le boîtier de collecte (170) pour vaporiser les particules.

14. Procédé selon la revendication 13, comprenant en outre l'étape consistant à :
enlever des particules vaporisées hors du boîtier de collecte (170) par la même ouverture (160) que celle par laquelle le faisceau de particules focalisé est entré dans le boîtier de collecte.
